# EUROPÄISCHE PATENTSCHRIFT

(11) **EP 0 756 115 B1**
(45) Veröffentlichungstag und Bekanntmachung des Hinweises auf die Patenterteilung: **24.03.1999**
(21) Anmeldenummer: 96109651.8
(22) Anmeldetag: 15.06.1996
(51) Int. Cl.: F16K 1/226

(54) **Absperrklappe**
Gate valve
Vanne d'arrêt

(30) Priorität: 28.07.1995 DE 19527656
(43) Veröffentlichungstag der Anmeldung: 29.01.1997
(73) Patentinhaber: Erhard GmbH & Co, 89522 Heidenheim (DE)
(72) Erfinder: Förster, Siegmar, Dipl.-Ing., 89518 Heidenheim (DE)

(56) Entgegenhaltungen:
- EP-A- 0 498 315
- DE-A- 1 800 423
- DE-A- 2 605 189
- DE-U- 1 931 755
- US-A- 2 847 181
- US-A- 4 763 877

## Beschreibung

Die Erfindung betrifft eine Absperrklappe mit exzentrisch gelagerter Klappenscheibe, die über einen an ihrem Außenumfang vorgesehenen Klappensitz mit mindestens einem gummielastischen Dichtring zusammenwirkt, wobei der Dichtring in einer ringförmigen Nut des Gehäuses der Absperrklappe gelagert ist, und der Klappensitz in der geschlossenen Stellung am Dichtring anliegt.

Im Bereich der Wasser- und Gasversorgung werden Absperrklappen mit gummielastischer Dichtung zwischen Klappenscheibe und Gehäusesitz eingesetzt. Diese Absperrklappen sind in vielen Fällen in erdverlegter Rohrleitung eingebaut und sollen eine lange Lebensdauer haben, um die Verfügbarkeit der Versorgung zu gewährleisten und Aufgrabungen zu vermeiden. Hierzu sind Klappen erforderlich, die die gewünschten Anforderungen auf Dichtheit und Funktion auf lange Zeit erfüllen.

Bei den bekannten Klappenbauarten ist ein gummielastischer Dichtring entweder an der Klappenscheibe eingespannt und dichtet gegen einen festen Sitzring im Gehäuse, z.B. DE-P 18 00 423, oder der Dichtring ist im Gehäuse eingespannt und dichtet gegen eine metallische Sitzpartie der Klappenscheibe, z.B. US-4,763,877. Durch die beim Abschluß anstehenden Differenzdrücke und daraus resultierenden Kräfte wird die Klappenscheibe um die im Wellenlager und in den Klappenscheibenverbindungen vorhandenen Fertigungsspiele (-lose) aus ihrer theoretischen Mittellage verschoben. Außerdem wird die Klappenscheibe durch diese Kräfte innerhalb der elastischen Biegung verformt. Diese Veränderungen liegen im Millimeterbereich.

Diese durch die Lageänderung und Verformungen entstehenden Abweichungen der Dichtgeometrie vom Gehäusesitz zum Scheibensitz wirken sich ausgesprochen nachteilig aus, denn sie müssen durch entsprechende Vorspannung der gummielastischen Dichtung ausgeglichen werden. Dadurch treten überhöhte Pressung, hohe Reibung und ein hohes Bedienungsmoment auf, die die Lebensdauer des Dichtsystems nachteilig beeinflussen und verteuern.

Nach DIN müssen Absperrarmaturen in beiden Durchflußrichtungen mit dem Nenndruck auf Dichtheit geprüft werden, obwohl sie in vielen Fällen in der Praxis weit unterhalb vom Nenndruck betrieben werden. Die bei den bekannten Klappenbauarten einmal beim Prüfen eingestellte Dichtpressung ist dann nicht erforderlich und führt nachteilig zur erhöhten Belastung während der gesamten Betriebszeit.

Diese Nachteile werden auch nicht durch die in EP-A 498 315 vorgestellte Dichtungsanordnung überwunden, die einen zusätzlichen Haltering umfaßt, dessen Schraubenköpfe den Zeta-Wert der Armatur bei langen Baulängen ungünstig beeinflussen. Insbesondere unterliegt der in EP-A 498 315 vorgeschlagene Dichtring beim Einfahren in den Klappensitz einer extremen mechanischen Beanspruchung, da er an seinem Innenradius fixiert ist und im Bereich der Kontaktfläche zur Klappenscheibe frei beweglich ist.

Aufgabe der vorliegenden Erfindung ist es, die Dichtpartie einer Absperrklappe so zu gestalten, daß diese Nachteile beiseitigt werden und unabhängig von einer Lage- und Formänderung der Klappenscheibe eine einwandfreie Abdichtung ohne überhöhte Verpressung des Dichtrings erfolgt.

Diese Aufgabe wird erfindungsgemäß dadurch gelöst, daß in der geschlossenen Stellung zwischen der Nut und dem Klappensitz vor und hinter dem Dichtring keilringförmige Freiräume vorhanden sind, wobei die Keilringflächen dieser Freiräume durch das Zusammenwirken von Nutwand und radialer Fläche des Klappensitzes gebildet werden.

Die Erfindung weist den Vorteil auf, daß sich die vom Betriebsdruck abhängige Abdichtung mit der erforderlichen Dichtpressung in Abhängigkeit von Druckrichtung und Betriebsdruck selbständig einstellt und sich bei Druckbelastung zurückstellt. Je nach Druckrichtung wird der Dichtring vom Betriebsdruck in einen der beiden keilförmigen Freiräume gedrückt und legt sich dort an den jeweils gegenüberliegenden Keilringflächen dichtend an. Der Dichtring folgt dabei auch den Veränderungen der Klappenscheibe und dichtet trotz verschobener Dichtgeometrie einwandfrei ab. Dieses Dichtprinzip wirkt in beiden Druckrichtungen: direkt und indirekt.

Steht die Klappenscheibe in Zwischen- oder Offenstellung, ist der gummielastische Dichtring vollkommen entlastet. Dadurch wird der Verschleiß verringert und die Lebensdauer erhöht.

Nach einer Weiterbildung der Erfindung weist die Nut einerseits einen Radius in den Außenmaßen des Dichtrings auf und ist andererseits durch einen Ring begrenzt, der in Art eines Sprengrings ausgebildet ist und innerhalb einer Nut gehalten wird. Dieser Ring begrenzt die Bewegung des Dichtrings bei indirekter Druckbeaufschlagung, so daß der Dichtring auch bei hohen Strömungsgeschwindigkeiten und auftretenden Kavitationserscheinungen nicht mitgerissen werden kann.

Vorteilhafterweise hat der Dichtring die Form eines O-Ringes und ist als einstückige Gummi-Metallverbindung ausgebildet, die im Kern mit einem Drahtring armiert ist. Der Drahtring ermöglicht eine je nach Einsatzbereich, Nennweite und Betriebsdruck genau definierbare Vorspannung des Dichtrings; gleichzeitig wird die Montage erleichtert.

In einer vorteilhaften Weiterbildung der Erfindung wird der keilförmige Freiraum zwischen Dichtring und dem Ring durch ein z.B. gummielastisches Füllstück ausgefüllt. Das Füllstück dient dazu, das Eindringen von Fremdstoffen in den keilförmigen Freiraum zu verhindern und den Dichtring durch seine gummielastische Eigenschaft nach erfolgter Druckentlastung zur Anlage an den Radius zurückzustellen.

Nach einer anderen Weiterbildung der Erfindung ist das Füllstück mit dem Ring als einstückige Gummi-Metallverbindung ausgebildet, wodurch auch das Eindringen von Fremdstoffen in den Raum zwischen Füllstück und Ring gänzlich verhindert und gleichzeitig Assemblierungszeiten verkürzt werden.

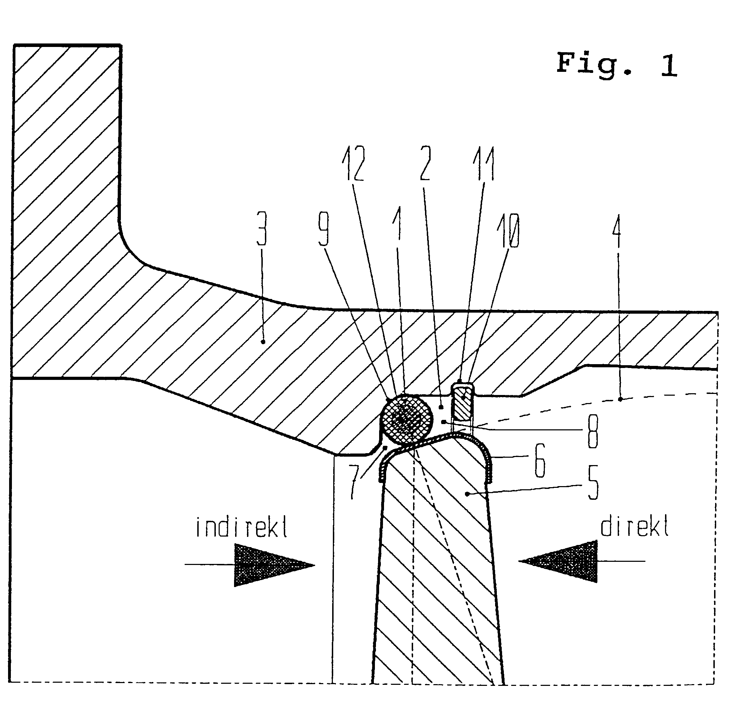

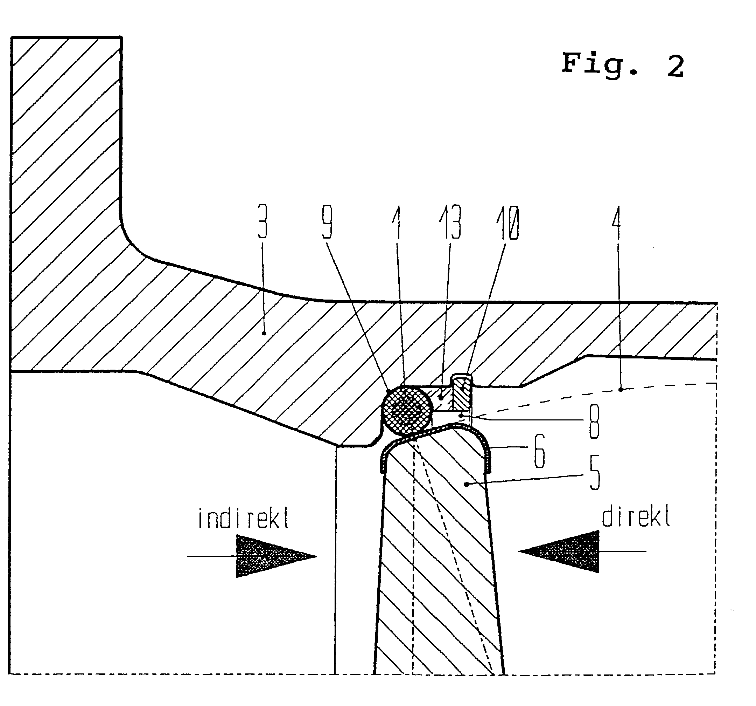

Anwendungsbeispiele der Erfindung werden im folgenden in den Figuren 1 und 2 dargestellt, von denen
- Figur 1: einen Schnitt durch eine Absperrklappe im geschlossenen und drucklosen Zustand ohne Füllstück, und
- Figur 2: einen Schnitt durch eine Absperrklappe im geschlossenen und drucklosen Zustand mit Füllstück darstellt.

In Figur 1 ist im Gehäuse (3) einer erfindungsgemäßen Absperrklappe ein Dichtring (1) in einer ringförmige Nut (2) so gelagert, daß er im Schwenkradius (4) der Klappenscheibe (5) gegen den Klappensitz (6) anliegt. In der dargestellten Schließlage der Klappenscheibe (5) (druckloser Zustand) stützt sich der Dichtring (1) mit geringer Vorspannung zwischen dem Radius (9) und dem Klappensitz (6) ab.

In der dargestellten geschlossenen Stellung der Klappenscheibe (5) bildet die senkrechte Fläche von Nut (2) im Zusammenwirken mit der radiusförmigen Fläche des Klappensitzes (6) vor dem Dichtring (1) den keilringförmigen Freiraum (7). Die zylindrische Fläche der Nut (2) bildet im Zusammenwirken mit der radiusförmigen Fläche des Klappensitzes (6) nach dem Dichtring (1) den keilringförmigen Freiraum (8). Der Freiraum (8) ist durch den Ring (10) begrenzt. Der Ring (10) ist in Art eines geschlitzten Sprengrings ausgeführt und innerhalb der Nut (11) gehalten.

Unter Beaufschlagung durch den Betriebsdruck wird der Dichtring (1) je nach Druckrichtung (direkt: von der Seite der Klappenwelle oder indirekt: entgegen der Klappenwelle) in die keilringförmigen Freiräume (7) oder (8) eingepreßt. Der Dichtring (1) mit seiner Armierung durch den Drahtring (12) ist so flexibel gestaltet, daß er den Lage- und Formänderungen der Klappenscheibe (5), die infolge der Druckbeaufschlagung auftritt, folgt und an den Flächen der keilringförmigen Freiräume zur Anlage kommt und abdichtet.

Figur 2 zeigt beispielhaft eine Weiterbildung der Erfindung. Im Gehäuse (3) der erfindungsgemäßen Absperrklappe ist ein Dichtring (1) in einer ringförmigen Nut (2) so gelagert, daß er im Schwenkradius (4) der Klappenscheibe (5) gegen den Klappensitz (6) anliegt. Der keilförmige Freiraum (8) ist zwischen dem Dichtring (1) und dem Ring (10) durch ein z.B. gummielastisches Füllstück (13) ausgefüllt, das gegebenenfalls einstückig als Gummi-Metallverbindung hergestellt ist.

## Patentansprüche

1. Absperrklappe mit exzentrisch gelagerter Klappenscheibe (5), die über einen an ihrem Außenumfang vorgesehenen Klappensitz (6) mit mindestens einem gummielastischen Dichtring (1) zusammenwirkt, wobei der Dichtring (1) in einer ringförmigen Nut (2) des Gehäuses (3) der Absperrklappe gelagert ist, und der Klappensitz (6) in der geschlossenen Stellung am Dichtring (1) anliegt, **dadurch gekennzeichnet, daß** in dieser geschlossenen Stellung zwischen der Nut (2) und dem Klappensitz (6) vor und hinter dem Dichtring (1) keilringförmige Freiräume (7, 8) vorhanden sind, wobei die Keilringflächen dieser Freiräume (7, 8) durch das Zusammenwirken von Nutwand und radialer Fläche des Klappensitzes gebildet werden.

2. Absperrklappe nach Anspruch 1, **dadurch gekennzeichnet, daß** die Nut (2) einerseits einen Radius (9) in den Außenmaßen des Dichtrings (1) hat und andererseits durch einen Ring (10) begrenzt ist, der in Art eines Sprengrings ausgebildet und innerhalb einer weiteren Nut (11) gehalten ist.

3. Absperrklappe nach einem der vorhergehenden Ansprüche, **dadurch gekennzeichnet, daß** der Dichtring (1) die Form eines O-Ringes hat und einstückig als Gummi-Metallverbindung mit einem Drahtring (12) im Kern armiert ist.

4. Absperrklappe nach Anspruch 2, **dadurch gekennzeichnet, daß** der keilförmige Freiraum (8) zwischen dem Dichtring (1) und dem Ring (10) durch ein z.B. gummielastisches Füllstück (13) ausgefüllt ist.

5. Absperrklappe nach Anspruch 4, **dadurch gekennzeichnet, daß** das Füllstück (13) mit dem Ring (10) als Gummi-Metallverbindung einstückig ausgebildet ist.

## Claims

1. Shut-off valve with eccentrically mounted valve plate (5) which cooperates via a valve seat (6) provided at its outer circumference with at least one rubber elastic sealing ring (1), wherein the sealing ring (1) is mounted in an annular groove (2) of the housing (3) of the shut-off valve, and the valve seat (6) in the closed position abuts against the sealing ring (1), characterised in that in this closed position between the groove (2) and the valve seat (6) in front of and behind the sealing ring (1) there are tapered ring-shaped free spaces (7, 8), wherein the tapered ring surfaces of these free spaces (7, 8) are formed by the cooperation of groove wall and radial surface of the valve seat.

2. Shut-off valve according to claim 1, characterised in that the groove (2) on the one hand has a radius (9) in the outside dimensions of the sealing ring (1) and on the other hand is defined by a ring (10) which is constructed after the fashion of a spring ring and held within an additional groove (11).

3. Shut-off valve according to any of the preceding claims, characterised in that the sealing ring (1) has the form of an O-ring and in one piece as a rubber-to-metal joint is reinforced with a wire ring (12) in the core.

4. Shut-off valve according to claim 2, characterised in that the wedge-shaped free space (8) between the sealing ring (1) and the ring (10) is filled by a filler piece (13) which is e.g. rubber elastic.

5. Shut-off valve according to claim 4, characterised in that the filler piece (13) with the ring (10) is constructed in one piece as a rubber-to-metal join.

## Revendications

1. Vanne d'arrêt comprenant un disque de vanne (5) qui est monté de manière excentrique et qui coopère au moyen d'un siège de vanne (6) prévu à sa circonférence extérieure avec au moins un anneau d'étanchéité (1) ayant l'élasticité du caoutchouc, l'anneau d'étanchéité (1) étant monté dans une rainure annulaire (2) de la cage (3) de la vanne d'arrêt et le siège (6) de la vanne étant en appui contre l'anneau d'étanchéité (1) à la position de fermeture, caractérisée en ce qu'à cette position de fermeture, il existe entre la rainure (2) et le siège (6) de la vanne des espaces libres annulaires cunéiformes (7, 8) devant et derrière l'anneau d'étanchéité (1), les surfaces annulaires cunéiformes de ces espaces libres (7, 8) étant formées par la coopération de la paroi de la rainure et de la surface radiale du siège de la vanne.

2. Vanne d'arrêt selon la revendication 1, caractérisée en ce que la rainure (2) a d'une part un rayon (9) aux cotes extérieures de l'anneau d'étanchéité (1) et d'autre part elle est délimitée par un anneau (10) qui est réalisé à la manière d'un jonc et qui est tenu à l'intérieur d'une autre rainure (11).

3. Vanne d'arrêt selon l'une des revendications précédentes, caractérisée en ce que l'anneau d'étanchéité (1) a la forme d'un joint torique et il est armé au centre au moyen d'un anneau de fil métallique (12) de manière à être monobloc sous forme d'une combinaison caoutchouc-métal.

4. Vanne d'arrêt selon la revendication 2, caractérisée en ce que l'espace libre cunéiforme (8) compris entre l'anneau d'étanchéité (1) et l'anneau (10) est empli d'une pièce intercalaire (13) ayant par exemple l'élasticité du caoutchouc.

5. Vanne d'arrêt selon la revendication 4, caractérisée en ce que la pièce intercalaire (13) est réalisée en une pièce avec l'anneau (10) sous forme d'une combinaison de caoutchouc et de métal.
